# EUROPEAN PATENT APPLICATION

(11) **EP 2 199 696 A1**
(43) Date of publication of application: **23.06.2010**
(21) Application number: 08800537.6
(22) Date of filing: 28.08.2008
(51) Int. Cl.: F24F 5/00, F24F 3/044, F24J 2/04, F26B 21/00

(54) **A KIND OF ACTIVE THERMOREGULATION SYSTEM WITHOUT MOTIVITY AND THE METHOD THEREOF**

(30) Priority: 29.08.2007 CN 200710076594
(71) Applicant: Peng, Jianning, Guangdong 518026 (CN)
(72) Inventor: Peng, Jianning, Guangdong 518026 (CN)
(74) Representative: Michalski Hüttermann & Partner Patentanwälte
(86) International application number: PCT/CN2008/001539
(87) International publication number: WO 2009/030110

(57) **Abstract**

An active thermoregulation system without motivity and the method thereof are provided. The system includes a gas source, a regular closed space (1A), and an exhaust device without motivity (1B), a first connecting device (1G) and a second connecting device (1F). In the process of use, the regular closed space (1A) is separated from the external environment. The exhaust device without motivity (1B) includes a blade and a corresponding suction opening, which makes the exhaust device without motivity (1B) connect with the regular closed space (1A). During working process, by utilizing the temperature difference between the natural wind of the external environment and the regular closed space (1A), the blades of the exhaust device without motivity (1B) is driven to rotate. A low pressure is formed at the suction opening, and thus the air of the suction opening is extracted. Continuously, the airflow of the gas source is extracted through the regular closed space (1A), and a heat exchanging airflow is formed in the regular closed space (1A).

## Description

### FIELD OF THE INVENTION

The present invention relates to a kind of thermoregulation system and the method thereof, more particularly, to a kind of active thermoregulation system without motivity and the method thereof.

### BACKGROUND OF THE INVENTION

It is well known that, solar energy is a kind of regenerative and alternative energy which is inexhaustible. The earth is abundant in solar energy resource. The total amount of the solar radiation received by the earth is equivalent to 1000 times of the total commercial energy consumption in the world. The sunshine arriving at the earth in an hour is enough to supply the energy requirement of the whole world for one year. So, it can be seen that the solar energy can not only be regarded as a low-cost substitute of fossil fuel, but also be used for reducing the emission of carbon dioxide and protecting environment. Consequently, in the long term, the utilization market of solar heat has a quite wide prospect.

Likewise, as a regenerative energy, marsh gas has extremely extensive and abundant raw and processed materials resource. It is a clean gas that can directly substitute fossil fuel with low cost. Consequently, the market potential of marsh gas is very vast, and its economic benefits are very remarkable.

Likewise, there still is some free regenerative energy on the earth, such as geothermal, etc., which also can be regarded as a low-cost substitute of fossil fuel. However, some subterranean resource (such as a subterranean river, a low temperature geothermal) also can be regarded as cold sources, and be used as a low-cost substitute for cooling and refrigerating in summer. An example is given for illustrating: a geothermal system with a temperature among 15-20°C can be used for heating in winter and cooling or reducing temperature in summer.

Likewise, wind power (including gentle breeze) that extensively exists in nature also can provide power for ventilation and can be used as a low-cost substitute of an air feeder or a suction fan.

Along with the fast development of economy, the shortage problems of non-renewable energy resource, such as electric power, coal or oil, appear repeatedly. Meanwhile, the problems like energy shortage, environmental pollution and greenhouse gas emission have become a bottleneck to restrict socio-economic development day by day.

At present, a large amount of articles in fields of industry and agriculture and the daily life are heated and dried by the utility of thermal mediums produced by electric power and fuel etc. However, the energy consumption in such method mainly comes from the heating of medium and an air feeder or a suction fan. A universal phenomenon existing in present time is that, with abundant sunlight, especially in scorching summer, people are used to heating or drying industry and agriculture materials by using electric power, burning coal, gas or oil, etc. Meanwhile, in some rural areas, especially far-off regions, the peasant has to carry out the heating or drying processing to agricultural byproducts through the combustion.

In winter, people use electricity or fuel for heating and heat supply, etc. For example, the energy consumption of building heating in China has reached 12% of total coal output at present. All these need a great equipment investment and running cost, and it also further intensifies the energy shortage, leads to further deterioration of environmental pollution and exasperates regional greenhouse effects.

During the Spring Festival in 2008, the snow calamity in most provinces and cities in south of China caused a paralysis of important traffic facilities such as expressways and national highway, etc., and brought serious influences on economical operations and daily life of people in China. For this reason, the Chinese Government promptly started emergent responses, and sent out a large amount of work force and material resources to remove the snow on the road.

After the deadly Wenchuan earthquake in China on 2008 5.12, the masses in disaster areas had to live in simple and easy movable board houses or disaster relief tents for a long time. However, in the forthcoming winter, the problems to guarantee heat supply for the masses in disaster areas, keep fire safety and overcome the serious shortage of electric power in disaster areas are solved urgently.

In summer, people have to utilize electricity or fossil fuel to drive cooling device to satisfy the need of temperature reducing or cooling. The energy consumption in such method mainly comes from the generation of cooling medium and an air feeder or a suction fan.

Generally, the thermoregulation method in prior art is to consume electrical power or fossil fuel. The energy consumption generated by applications of these techniques mostly comes from the production of heat exchange medium, and the rest comes from the transportation of heat exchange medium. All these lead to its high running cost.

In addition, although some individual units have adopted the solar heat gas flow to heat or dry the materials through forced convection, but the shortcoming of this method is that it has a high running cost. This would probably hinder the wide application of the solar heat gas flow in the fields of industrial and agricultural production, daily life, etc.

Consequently, it is very important and urgent to make full use of regenerative energy such as solar energy, wind power, marsh gas, subterranean resource and so on, especially to make full use of them with low-cost and high efficient, and to realize the industrialization as early as possible.

Meanwhile, the consumer's most favorite techniques and products are practical, durable and with high performance price ratio, and they can give them directly benefit from their production and life. Obviously, the key point for the regenerative energy can be widely applied to fields such as industrial and agricultural production and life is that the product should be practical, durable, with reasonable price and low operation and maintenance costs.

### SUMMARY OF THE INVENTION

The present invention provides an active thermoregulation system without motivity and the method thereof to overcome the defects of the prior art that it needs electrical power and fossil fuel consumption for thermoregulation.

The technical solution adopted of the present invention is to provide an active thermoregulation system without motivity, which including a gas source, a regular closed space, an exhaust device without motivity, a first connecting device and a second connecting device;

The gas source includes a gas flow outlet;

The regular closed space is separated from the external environment while using, and it includes an inlet and an outlet which set up separately;

The exhaust device without motivity includes a blade and a suction opening corresponding to the blade;

One end of the first connecting device is connected with the gas flow outlet of the gas source, and the other end is connected with the inlet of the regular closed space to join the gas source to the regular closed space;

One end of the second connecting device is connected with the suction opening, and the other end is connected with the outlet of the regular closed space to join the exhaust device without motivity to the regular closed space;

During working process, by utilizing the natural wind of the external environment and/or the temperature difference between the inside and outside of the regular closed space, the blade of the exhaust device without motivity is driven to rotate, then a low pressure is formed at the suction opening, the gas at the suction opening is extracted and this makes the gas flow around the gas source continuously extracted through the regular closed space, and a heat exchanging gas flow is formed in the regular closed space.

Selectively, set materials needed to be processed by heat exchanging is positioned inside the regular closed space, or, one or more surfaces of the regular closed space are made of heat conductive materials and the materials needed to be processed by heat exchanging are positioned on and/or around such surfaces.

Selectively, the gas source at least comprises any one of a hot gas source or a cold gas source;

Wherein, the temperature of the hot gas flow from the hot source is higher than the temperature of the materials needed to be processed by heat exchanging, the gas flow of the hot gas source comes from a heat collector, and/or a heat exchanger, and/or hot gas; the heat collector comprises high, middle and low temperature solar air heat collector; the hot gas comprises smoke and/or discharged hot flue gas;

The temperature of the cold gas flow from the cold source is lower than the temperature of the materials needed to be processed by heat exchanging, the gas flow of the cold gas source comes from air with temperature lower than the materials needed to be processed by heat exchanging, and/or cooling device, or cold gas;

Or, the gas source may comprise more than two gas sources; when the hot gas source and the cold gas source are connected in parallel, a selection device for selecting at least one of the hot gas source and the cold gas source to work is provided between the hot gas source and the cold gas source.

Selectively, when the gas source is the hot gas source, the inlet is set at the under layer or the bottom of the regular closed space, and the outlet is set at the upper layer or on the top of the regular closed space; when the gas source is the cold gas source, the inlet is set at the upper layer and on the top of the regular closed space, and the outlet is set at the under layer or the bottom of the regular closed space.

Selectively, when the materials needed to be processed by heat exchanging are positioned inside the regular closed space, an energy storage material is positioned inside the regular closed space; or when one or more surfaces of the regular closed space are made of heat conductive material and the materials needed to be processed by heat exchanging are positioned on or around such surfaces, the energy storage material is positioned inside the regular closed space, and/or on the surfaces, and/or around the surfaces.

The first connecting device is a first connecting pipe provided with a valve and a control device;

The second connecting device is a second connecting pipe provided with a valve and a control device; and a check valve is installed on the second connecting pipe.

The present invention further provides an active thermoregulation method without motivity, which comprises following steps:
S1: setup a gas source and provide gas flow through a gas flow outlet;
S2: connect a regular closed space separated from the external environment with the gas source, and the gas flow enters into the regular closed space through an inlet;
S3: setup an exhaust device without motivity and connect the exhaust device without motivity with the outlet of the regular closed space, the gas flow of the gas source is extracted through the outlet by the exhaust device without motivity, and a heat exchanging gas flow is formed through the regular closed space.

Selectively, the method further comprises a detection and control step S4, setup a detection device and a control device to detect and accurately control the parameters of the temperature, humidity, throughput, heat exchange amount and processing time of the gas flow; setup an auxiliary fan and start the auxiliary fan when the throughput is insufficient.

Selectively, when the materials needed to be processed by heat exchanging are positioned inside the regular closed space, an energy storage material is positioned inside the regular closed space; or when one or more surfaces of the regular closed space are made of heat conductive materials and the materials needed to be processed by heat exchanging are positioned on or around such surfaces, the energy storage material is positioned inside the regular closed space, and/or on the surfaces, and/or around the surfaces.

Selectively, the gas source comprises a hot gas source and/or a cold gas source;

When the materials needed to be processed by heat exchanging need to be heated, the hot gas source is connected to provide hot gas flow with temperature higher than the temperature of the materials needed to be processed by heat exchanging;

When the materials needed to be processed by heat exchanging need to be cooled, the cold gas source is connected to provide cold gas flow with temperature lower than the temperature of the materials needed to be processed by heat exchanging;

Or, when the hot gas source and the cold gas source are connected in parallel, one of the hot gas source and the cold gas source is selected to connect with the regular closed space by a selection device; when the materials needed to be processed by heat exchanging need to be heated, the hot gas source is connected, and when the materials needed to be processed by heat exchanging need to be cooled, the cold gas source is connected.

Following advantages can be provided by the present invention:

Even though in the remote mountain area, the materials can be processed for active heating or increasing temperature and drying without motivity by the hot gas flow, which is produced fully by the regenerative energy such as solar energy, marsh gas and geothermal, even by the flue gas or the discharged hot waste gas flow. Similarly, the materials can be processed for cooling or decreasing temperature without motivity by the cold gas flow, which is produced fully by the underground resources such as a subterranean river or a low temperature geothermal, even by air or the discharged cold waste gas flow.
2. The present invention has advantages such as noiselessness, pollution-free and no operation cost and so on.
3. In order to meet the demands of all-weather heat supply or increasing temperature or drying and requirement of heating temperature, both of the heat resources such as solar energy, marsh gas, geothermal and hot gas (including the flue gas, the discharged hot waste gas) can be utilized in coordination with each other, also be utilized as the standby and/or supplementary heat resource for the conventional heat supply. Similarly, the cold gas flow produced by the underground resource can be utilized as the standby and/or supplementary cooling resource for the conventional cooling supply.
4. As a solar air heat collector of high or middle temperature is selected, hot gas flow with higher temperature can be provided.
5. The present invention also can be used for materials' humidity elimination, moderate temperature reducing, fresh air exchange, and drying at normal temperature, etc.
6. For meeting the practical requirement, a detector and / or a controller and the auxiliary fan can be installed to control accurately the parameters of the heat exchanging gas flow, such as temperature, humidity, ventilation volume and processing time.
7. Only if there is a regular closed space, not only a heat exchange for the material put inside the regular closed space can be processed, but also a heat exchange for the material put on or around the regular closed space's surface which is made of heat conductive material. Moreover, the heat exchange processing effect can be improved by putting the energy storage materials inside the regular closed space, likewise on or around this surface of the regular closed space. The regular closed space can be fixed or movable, and its actual size is in accordance with the practical requirement and the specific circumstance, etc.
8. The present invention also can be used for a greenhouse.
9. The present invention also can be applied for regulating the indoor's temperature or humidity and improving the indoor's air quality and realizing the green energy saving in the architectural field.
10. The present invention also can be applied in fields such as field work or national defence.
11. The present invention also has advantages of little system investment, no maintenance cost, long work life, energy saving and environmental protection etc.
12. The system of present invention has simple structure, and it is convenient to apply widely in fields such as industrial and agricultural production, daily life and so on.

### BRIEF DESCRIPTION OF THE DRAWINGS

FIG 1 is a schematic diagram of the first embodiment of the active thermoregulation system without motivity according to the present invention;
FIG.2 is a schematic diagram of the second embodiment of the active thermoregulation system without motivity according to the present invention;
FIG. 3 is a schematic diagram of the third embodiment of the active thermoregulation system without motivity according to the present invention;
FIG.4 is a schematic diagram of the fourth embodiment of the active thermoregulation system without motivity according to the present invention;
FIG.5 is a schematic diagram of the fifth embodiment of the active thermoregulation system without motivity according to the present invention;
FIG.6 is a schematic diagram of the sixth embodiment of the active thermoregulation system without motivity according to the present invention;
FIG.7 is a schematic diagram of the seventh embodiment of the active thermoregulation system without motivity according to the present invention;
FIG.8 is a schematic diagram of the eighth embodiment of the active thermoregulation system without motivity according to the present invention;
FIG.9 is a schematic diagram of the ninth embodiment of the active thermoregulation system without motivity according to the present invention;
FIG.10 is a schematic diagram of the tenth embodiment of the active thermoregulation system without motivity according to the present invention;
FIG.11a and FIG 11b are schematic diagrams of the eleventh embodiment of the active thermoregulation system without motivity according to the present invention;
FIG.12 is a schematic diagram of the twelfth embodiment of the active thermoregulation system without motivity according to the present invention.

### DETAILED DESCRIPTION OF THE PREFERRED EMBODIMENT

In the embodiments of the present invention, objects such as room, warehouse, container (including metal container, such as a heat exchanger), greenhouse, cellar, tentage and pipe, etc. can be used as the regular closed space. There are one or more gas flow outlets of the gas source near the regular closed space. The gas source comprises any one of a hot gas source or a cold gas source, or same kind of gas sources connected in series for use, or the hot gas source and cold gas source connected in parallel, in which a selector device is operated between these two kinds of gas sources. The temperature of the hot gas flow from the hot source is higher than the temperature of the material needed to be processed by heat exchanging; the hot gas flow comes from a heat collector, and/or a heat exchanger, and/or hot gas and so on. Here a solar air heat collector of high or middle or low temperature is used for the heat collector, and the flue gas or the discharged hot waste gas flow can be used as the hot gas source. Similarly the temperature of the cold gas flow from the cold source is lower than the temperature of the material needed to be processed by heat exchanging; the cold gas flow comes from the lower temperature air, and/or a cooling device, and/or cooling gas and so on. Herein, the solar air heat collector is placed at sufficient sunshine; proper exhaust devices without motivity are installed on the top of the regular closed space or at a spacious and suitable place nearby. The suction opening of every exhaust device without motivity is connected with the outlet of the regular closed space through a connecting pipe, on which a valve (including a check valve) installed; likewise the gas flow outlet of the gas source is connected with the inlet of the regular closed space through a connecting pipe, on which a valve installed. In additional, some control devices and auxiliary fans can be installed on the above mentioned connecting pipe according to the actual requirement. Meanwhile, for the purpose of energy storage, the energy storage materials are selected to be placed inside the regular closed space, on and/or around the regular closed space's surface which is made of heat conductive materials.

The solar air heat collector can be consisted of Solarwall® Systems and a heat preservation mantle, or be made of inorganic high-efficient thermotubes with a heat preservation mantle, also be another high-efficient hot air device. For example, (1) the Solarwall® Systems comprise a solarwall plate which fixed on the surface of a bellows, a coating with a heat absorption efficiency up to 80% is coated on the surface of the solarwall plate, a lot of apertures with a diameter about 1 millimeter spread on the surface of the coating to allow external air getting through the surface. When external air is drawn in the bellows through the apertures on the solarwall plate, it absorbs the heat of the coating on the surface of the solarwall plate and turns into hot air. On the sufficient sunny conditions, the clean hot air flow which is 17°C ∼ 40°C higher than the environmental temperature is produced by the Solarwall® System. For illustration, some temperature records at the outlet of the Solarwall® Systems in Yunnan Province's summer and in Shandong Province's winter are shown below.

Hot-air temperature test report of the Solarwall® Systems done on September 12, 2005, which is a sunny day in Yunnan Province:

| 2005/09/12 | Ambient temperature°C | Outlet temperature of the Solarwall® Systems °C | Higher than the ambient temperature°C |
|---|---|---|---|
| 09 o'clock | 20.1°C | 40.0°C | 19.9°C |
| 10 o'clock | 22.4°C | 43.5°C | 21.1°C |
| 11 o'clock | 25.2°C | 49.0°C | 23.8°C |
| 12 o'clock | 27.0°C | 53.8°C | 26.8°C |
| 13 o'clock | 28.7°C | 66.4°C | 37.7°C |
| 14 o'clock | 29.5°C | 68.3°C | 38.8°C |
| 15 o'clock | 30.0°C | 69.2°C | 39.2°C |
| 16 o'clock | 30.2°C | 69.0°C | 38.8°C |
| 17 o'clock | 29.2°C | 68.7°C | 39.5°C |
| 18 o'clock | 28.3°C | 67.1°C | 38.8°C |

Hot-air temperature test report of the Solarwall® Systems done on January 23, 2005, which is a typical cold day in winter and a sunny day in Shandong Province:

| 2005/01/23 | Ambient temperature°C | Outlet temperature of the Solarwall® Systems °C | Higher than the ambient temperature °C |
|---|---|---|---|
| 00 o'clock | -7.6°C | 2.0°C | 9.6°C |
| 03 o'clock | -6.4°C | -1.9°C | 4.5°C |
| 06 o'clock | -5.0°C | 2.5.0°C | 7.5°C |
| 09 o'clock | -5.0°C | 10.5°C | 15.5°C |
| 12 o'clock | -2.5°C | 28.0°C | 30.5°C |
| 15 o'clock | 0.0°C | 24.0°C | 24.0°C |
| 18 o'clock | -5.5°C | 7.5°C | 13.0°C |
| 21 o'clock | - 6.0°C | 3.0°C | 9.0°C |

(2) The solar absorber plate is assembled of the inorganic high efficient heat tubes on the cover of the solar air heat collector made of the inorganic high-efficient thermotubes; the solar absorber plate absorbs solar heat to produce the hot air inside this collector by heat exchange. (3) The heat preservation mantle has the space between the surface of the heat collector and a high luminousness plate or film which encloses the surface of the heat collector (except the air inlet pipe) to form a greenhouse so as to prevent its heat dissipation and increase its surface temperature effectively. The function of the heat collector is to heat the inner air imported into the heat collector.

The function of the exhaust device without motivity is that by utilizing the natural wind and/or the temperature difference between the inside and outside of the regular closed space, the blades of the exhaust device without motivity are driven to rotate easily so that a low pressure ( being chimney effect) is formed at both of the suction opening of the exhaust device without motivity and the outlet of the regular closed space, then the air inside the regular closed space is extracted without motivity continuously, therefore a heat exchanging airflow is formed in the regular closed space. The exhaust device without motivity has advantages such as non-motivity (without power consumption), pollution-free, noiselessness, no operation cost, even working all day long etc. A turbo ventilator or a turbine ventilator or another type of exhaust equipment without motivity is chosen.

The principle of the present invention is as blow: Due to the suction function of the exhaust device without motivity, the gas at the gas source is extracted through the regular closed space continuously, then a heat exchanging gas flow is formed in the regular closed space so that the material placed inside the regular closed space, or on the surfaces made of the heat conductive material, or around such surfaces is processed instantly by heat exchanging. On condition that the temperature of the hot gas flow is higher than the temperature of the materials needed to be processed by heat exchanging, the materials is instantly heated or dried, likewise on condition that the temperature of the cold gas flow is lower than the temperature of the materials needed to be processed by heat exchanging, the materials is instantly cooled.

Meanwhile, for meeting the practical requirement, a detector and/or a controller and the auxiliary fan can be installed to control accurately the parameters of the heat exchanging gas flow, such as temperature, humidity, ventilation volume and processing time.

On the condition that the valve on the connecting pipe near the exhaust device without motivity (the second connecting device) is opened, meanwhile the regular closed space is open to air, the hot gas and humid air inside the regular closed space can be extracted by utilizing the exhaust device without motivity so that the materials inside the regular closed space is processed by use of moderate temperature reducing, fresh air exchange, and drying at normal temperature, etc. On the condition that the valve on the connecting pipe near at the gas source (the first connecting device) and the valve on the connecting pipe near the exhaust device without motivity (the second connecting device) are closed, the regular closed space forms a greenhouse. Therefore, it can be seen that the present invention can meet many kinds of usages.

The present invention has advantages of simple structure, little investment, no maintenance cost, long work life, energy saving and environmental protection etc, at the same time, a detector and/or a controller and the auxiliary fan can be installed to control accurately the parameters of the heat exchanging gas flow, such as temperature, humidity, ventilation volume and processing time so as to meet the practical requirement.

The present invention is applied widely in industrial and agricultural production and daily life, also in different fields such as architecture, fieldwork, national defence and so on.

Now, gives detailed description of twelve embodiments of the present invention as illustrations.

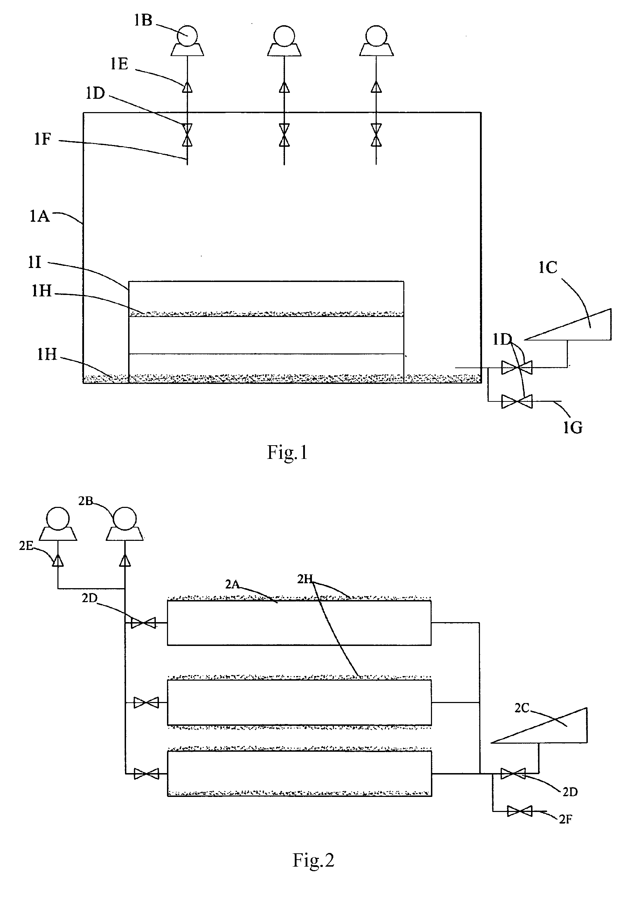

Figure 1 shows the first embodiment in accordance with the present invention. By the use of a greenhouse to realize some treatments to the agricultural byproducts or aquatic products, such as active ventilation, dry and humidity elimination etc.

In fig. 1, a common agricultural greenhouse 1A is used as a regular closed space. Proper amount of fans without motivity 1B are installed on the top of the greenhouse 1A or near the greenhouse 1A. The lower ends of the suction opening of the fans without motivity 1B are connected into a section of a connecting pipe 1F with a check valve 1E and a valve 1D installed on it. The other end of the connecting pipe 1F is inserted into the upper layer or the top of the greenhouse. A solar air heat collector 1C is placed near the greenhouse 1A and exposed directly under the sunlight. One end of one or more PVC hoses which installed valve 1D is inserted into the bottom of the greenhouse 1A, and the other end is connected to the outlet of the solar air heat collector 1C. In additional, a section of a nozzle stub 1G provided with the valve 1D is side connected to the PVC hose near the outlet of the solar air heat collector 1C. A multilayer goods shelf 1I is placed in the greenhouse 1A, and agricultural byproducts or aquatic products are rolled out and placed on each layer of the goods shelf 1I. Meanwhile, for heat storage, energy storage materials 1H (such as sands) are spread on the ground inside the greenhouse 1A and on the each layer of the goods shelf 1I.

When the agricultural byproducts or aquatic products have to be dried, the valves 1D on the PVC hose and at the side of the fan without motivity 1B should be opened at the same time when sunshine is sufficient. In the same condition, it is also can be used to dry other articles or clothing. Close the valve 1D on the PVC hose and keep the greenhouse 1A connecting with the outside through the nozzle stub 1G can implement some special treatments to the agricultural byproducts or aquatic products, such as ventilation, air drying, humidity elimination or moderate temperature reducing. At ordinary times, close all the valves 1D (including the valve 1D on the nozzle stub 1G) can make the greenhouse 1A to a solar greenhouse or a warehouse and so on. So the multi-functional usage of the present device can be realized.

When there is no sunshine or the sunshine is insufficient, hot gas (such as applicable smoke, applicable discharged hot fuel gas and so on) can be guided into the bottom of the greenhouse through the nozzle stub 1G which is side connected to the PVC hose near the outlet of the solar air heat collector 1C to dry the agricultural byproducts or aquatic products. In such a way, the all-day drying to the agricultural byproducts or aquatic products can be realized without the influence of weather.

For those agricultural byproducts or supplies which need to be stored away from light, the top of the greenhouse should be covered by shading material, and then the above-mentioned treatments can be carried out on the supplies.

It should be noted that, due to the drying characteristics of some agricultural byproducts or aquatic products, the parameters such as temperature, humidity and time during drying processing should be controlled accurately, thus a control unit, even an auxiliary fan should be added in the present system.

Figure 2 shows the second embodiment in accordance with the present invention. In hypaethral condition, by the use of a multilayer metal box to realize active dry and active temperature reducing to agricultural byproducts or aquatic products.

In fig. 2, a flat metal box is used as a regular closed space. A plurality of metal boxes 2A is placed on a multilayer goods shelf and the agricultural byproducts or aquatic products need to be dried or temperature reduced is placed on the metal boxes 2A.

A solar air heat collector 2C and proper amount of fans without motivity 2B are arranged near the multilayer goods shelf and exposed directly under the sunlight. The solar air heat collector 2C is connected to the inlets of the metal boxes 2A respectively through connecting pipes with a valve 2D. In additional, a section of a nozzle stub 2F provided with a valve 2D is side connected to the connecting pipe near the outlet of the solar air heat collector 1C. The outlet of the metal boxes 2A is connected with the suction opening of the fans without motivity 2B through connecting pipe which installed check valves 2E and valves 2D installed.

When sunshine is sufficient, the valves 2D on the connecting pipes of the fans without motivity 2B, the solar air heat collector 2C and the metal boxes 2A should be opened at the same time. Even in windless and hypaethral condition, hot air generated by the solar air heat collector 2C may form a higher hot pressure difference to make the air enter into the metal boxes 2A continuously and drive the fans without motivity 2B to rotate. Meanwhile, the rotation of the fans without motivity 2B may generate a negative pressure at the suction opening, and the negative pressure will enable the hot air to arrive at the suction opening through the metal boxes 2A continuously. When the hot gas flow passes through the metal boxes 2A, heat exchange is implemented between the hot gas flow and the agricultural byproducts or aquatic products, thus heating and drying function can be realized. Furthermore, energy storage materials 2H can be spread inside the metal boxes 2A or on the outer surfaces of the metal boxes 2A so as to improve heat exchange effect.

In additional, hot gas (such as applicable smoke, applicable discharged hot fuel gas and so on) also can be used to achieve the above-mentioned effects.

When the temperature of the agricultural byproducts or aquatic products is too high (higher than ambient temperature) and need to be cooled to reduce the temperature, it is only need to close the valve 2D at the side of the solar air heat collector 2C and open the valve 2D on the nozzle stub 2F to connect to the outside through the nozzle stub 2F. Thus, even in windless and hypaethral condition, as the temperature of the agricultural byproducts or aquatic products is high, the air inside the metal boxes 2A will be heated, thus the blades of the fans without motivity 2B will be driven to rotate. Then a negative pressure will be formed and air will be extracted into the metal boxes 2A through the side connected nozzle stub 2F continuously, in that way, heat of the agricultural byproducts or aquatic products will be taken away and the effect of temperature reducing and cooling will be obtained.

It is worthy to be mentioned that, the present embodiment also fits for some supplies which need to be heated or temperature reduced in a sterile environment.

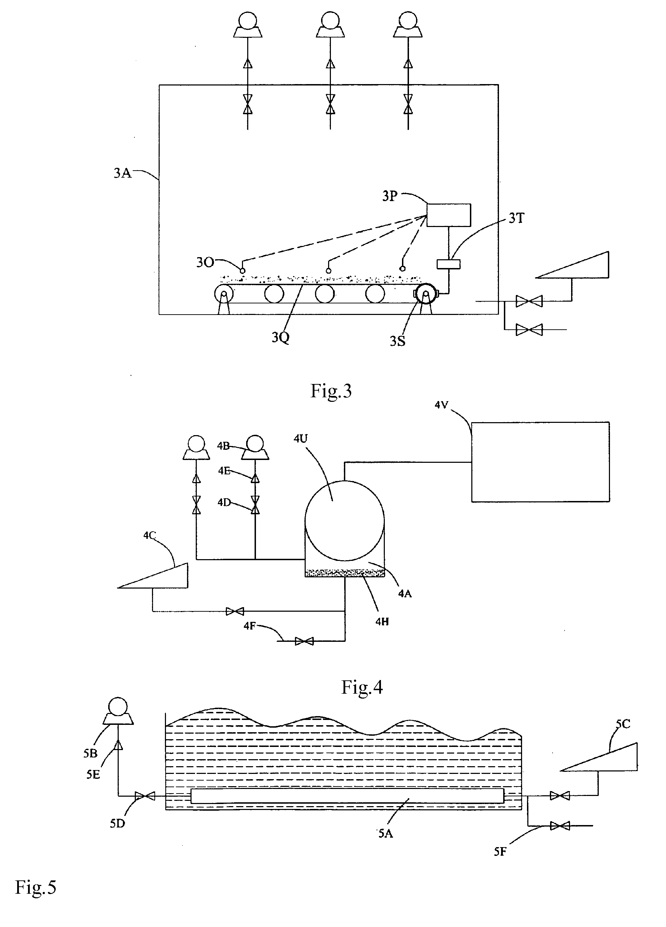

Figure 3 shows the third embodiment in accordance with the present invention. Implement automatic control in processing of the grain, cereal and seed, such as active ventilation, dry, humidity elimination or temperature reducing and so on.

In the present embodiment, the agricultural greenhouse in the embodiment 1 is replaced by a processing workshop 3A (a greenhouse with good light transmission is the best) as the regular closed space. The rest structures of the embodiment 3 are the same as those in the embodiment 1, detailed description please refer to the embodiment 1.

In the present embodiment, what should be further illustrated is that some sensing probes 3O for temperature and humidity sensing or moisture detecting are arranged at proper places of the processing workshop 3A. Signals sampled by these sensing probes 3O are sent into a control unit 3P. After analyzing and processing, the control unit 3P sent an instruction signal into a frequency converter 3T of a driving motor 3S which drives a conveyor belt 3Q, so that the driving motor 3S could change the forward speed of the conveyor belt 3Q according to the sampled sensing signals. In the processing, grain, cereal or seed etc. are spread on the conveyor belt 3Q uniformly, the rotation speed of the driving motor 3S is regulated according to the sampled signals of temperature, humidity or moisture, after that the forward speed of the conveyor belt 3Q is changed, thus the time of ventilation, dry, humidity elimination, temperature reducing of the grain, cereal or seed etc. are controlled. Thus, the requirement of industrial processing for grain can be sufficiently satisfied.

Comparing with the "advanced low-cost dry technological practical project" which published by Ministry of Agriculture, Forestry and Fishery (MAFF), the system according to present embodiment has following advantages in the aspect of the solar heat utilization:
1. To use solar energy in an active method without motivity and to realize the control of temperature, humidity or moisture in industrialization processing of grain, cereal and seeds etc.
2. To implement some treatments as active ventilation, humidity elimination and temperature reducing etc. to the grain, cereal, and seed.

Figure 4 shows the fourth embodiment in accordance with the present invention. A warming or heating of biomass pool (jar) in cold weather condition.

Now, take a biomass pool (jar) 4U which buried underground for an example.

Firstly, a preformed pool is built or placed underground. The pool should not be smaller than the buried portion of the biomass pool (jar) 4U. Some structure elements that sufficient to support the whole biomass pool (jar) 4U safely and stably are arranged inside this pool, or these structure elements have already be arranged at the bottom of the biomass pool (jar) 4U. The bottom of the pool is exactly aligned with or a little lower than the bottom of the biomass pool (jar) 4U. When the biomass pool (jar) 4U is placed into the pool, space exists at the ground between the pool and the biomass pool (jar) 4U will be sealed. In such a way, a closed space 4A is formed between the pool and the biomass pool (jar) 4U. Meanwhile, for heat storage, energy storage material or sands 4H can be spread on the bottom of the pool, or heat preservation materials can be packed on the inner or outer wall of the pool.

Proper amount of turbo ventilators 4B are arranged at a clear place near the biomass pool (jar) 4U, a solar air heat collector 4C is positioned on the other side and exposed directly under the sunlight. One end of several PVC hoses provided with check valves 4E and valves 4D is connected into the suction opening of the turbo ventilators 4B, and the other end of the PVC hoses is connected to the top of the closed space 4A. One end of another PVC hose is connected into the outlet of the solar air heat collector 4C through valve 4D and the other end is connected to the bottom of the closed space 4A. The valves on these PVC hoses are arranged at a place which is convenient for operation. In additional, a section of nozzle stub 4F provided with valve 4D is side connected with the PVC hose near the outlet of the solar air heat collector 4C.

In cold weather condition, when sunshine is sufficient, open the valves 4D on the PVC hoses of the solar air heat collector 4C and the turbo ventilator 4B at the same time, the biomass pool (jar) 4U will be heated or warmed up, and the marsh gas production can be increased. The generated marsh gas can be sent to a marsh gas combustion train 4V for combustion. When there is no sunshine or no need to heat or warm up, close these valves and the pool becomes a greenhouse.

When there is no sunshine or the sunshine is insufficient, hot gas (such as applicable smoke, applicable discharged hot fuel gas etc.) can be guided into the bottom of the closed space 4A of the pool through the nozzle stub 4F side connected with the PVC hose near the outlet of the solar air heat collector 4C to heat or warm up the biomass pool (jar) 4U. In such a way, the all-day heating to the biomass pool (jar) 4U can be realized without the influence of weather.

The present method not only can be applied to the new built biomass pool, but also to the rebuilding of the existed biomass pool.

By utilizing a similar method, heat supply, drying and heating processing can be carried out on other anaerobic materials.

For user with proper conditions, a set of fan without motivity and solar air heat collector can be used to dry agricultural byproducts, other articles and/or clothing, and it also can be used to heat or warm up biomass pool. In such a way, it can promote the enthusiasm of the uses on solar energy and marsh gas usage and push the application of regeneration energy such as solar energy and marsh gas.

It can be understood that, the preformed pool can be replaced by metal heat exchanging tube or heating jacket covered on the biomass pool (jar) 4U, that is, heat exchanging tube can be coiled around the buried portion of the biomass pool (jar) 4U or heating jacket can be added outside the body of the jar for heating the biomass pool (jar) 4U. In additional, the peripheral of the heat exchanging tube or the heating jacket of the biomass pool (jar) 4U can be packed with temperature preservation materials to improve the heating effect of the biomass pool (jar) 4U.

Figure 5 shows the fifth embodiment in accordance with the present invention. To regulate the temperature of water in a container in an active method without motivity.

In the present embodiment, a heat exchanger 5A (such as metal coiling tube, metal box) is used as a regular closed space. The heat exchanger 5A is placed into a water container (including an opening container, such as a water pool) which needed to regulate the temperature or a place above and near the surface of the water. The two sides of the heat exchanger 5A are connected with a solar air heat collector 5C and a fan without motivity 5B separately, and a section of a nozzle stub 5F provided with a valve is side connected with the connecting pipe at the side of a solar air heat collector 5C.

When sunshine is sufficient in winter, open the connecting pipe at two sides of the heat exchanger 5A, hot air generated by the solar air heat collector 5C is extracted into the heat exchanger 5A, and heats the water in the water container instantly, and then the hot air is extracted out by the fan without motivity 5B. It can provide low temperature hot water and prevent the water tube of the solar water heater from freezing and cracking.

It is worthy to be mentioned that, when a solar air heat collector 5C with high or middle temperature is employed, a solar hot gas flow with higher temperature can be used to heat the water inside the water container instantly, so as to satisfy the requirement of the water temperature. In additional, when the water temperature in the container is higher (higher than ambient temperature) and needs to reduce temperature, even in windless and hypaethral condition, close the valve 5D on the connecting pipe at the side of the solar air heat collector 5C and open the nozzle stub 5F, and use the water in the container as hot source to heat the air inside the heat exchanger 5A. The fan without motivity 5B is driven to rotate by the heated air to form a negative press, then air is extracted into the heat exchange 5A through the nozzle stub 5F to cool the water in the container and reduce the water temperature.

The present embodiment can be applied to the breeding of tropical and semi-tropical fishes in cold seasons, and also can be applied to the fish pond for viewing and admiring in city leisure and sightseeing place in winter. It can prevent the water from freezing in long time. It is worthy to be mentioned that, in cold seasons, low temperature hot water can be produced by present embodiment and then be heated continually by conventional resource, so as to satisfy the user's requirement of the temperature of hot water.

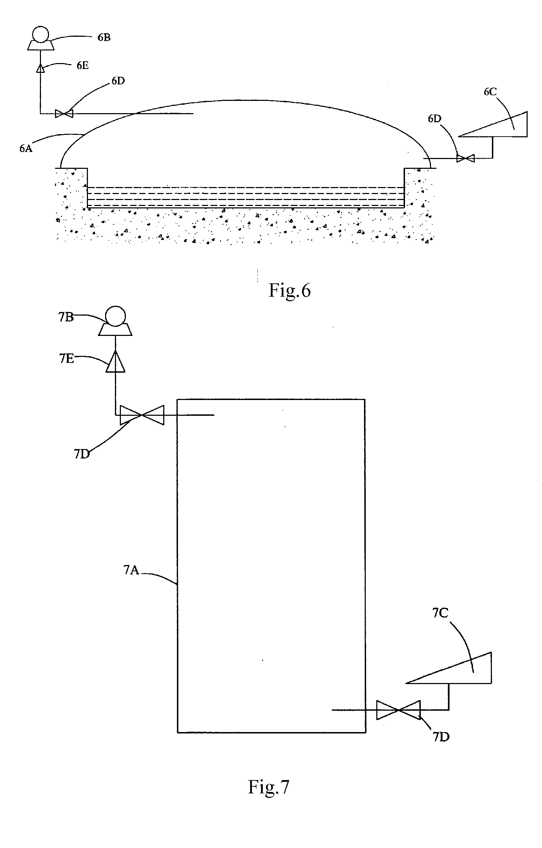

Figure 6 shows the sixth embodiment in accordance with the present invention. To accelerate the evaporation rate of brine in open-air salt pond to increase the salt output.

At present, nearly all salt ponds use spontaneous evaporation method to generate brine. It is seriously influenced by the nature factors such as season, weather etc. and the production cycle is short. Meanwhile, precipitation (including dew) will get into the salt pond and influence the output of brine.

A greenhouse 6A is built on the open-air salt pond and forms a regular closed space. Proper amount of fans without motivity 6B are arranged on the top of the greenhouse 6A or near the greenhouse 6A, and connected to the top or upside layer of the greenhouse 6A through some connecting pipes which provided with check valves 6E and valves 6D. A solar air heat collector 6C is positioned at a place where exposed directly under the sunlight, and connected to the bottom of the greenhouse 6A. The rest structures of the embodiment 6 are the same as those in the embodiment 1, detailed information please refer to the embodiment 1.

Due to the heat-absorbing function of solar heat collecting plate, even at night, a hot gas flow with temperature 5°C higher than ambient temperature can be generated (referring to the said hot-air temperature test report of the Solarwall® Systems done in typical winter in Shandong Province). It can improve the inner temperature of the whole greenhouse 6A effectively and increase the water evaporation of the salt pond. At the same time, steam can be extracted out from the salt pond. The greenhouse 6A can prevent the precipitation (including dew) from getting into the salt pond, in such a way, the brine output will be increased and the production time prolonged, thus the salt output can be increased. In order to increase the temperature inside the greenhouse 6A, the top of the greenhouse 6A can be made of transparent materials.

Figure 7 shows the seventh embodiment in accordance with the present invention. The ventilation, drying and disinfection of supplies such as bedding and clothing.

It becomes more and more difficult for residents who living in high buildings in city to use sun for ventilation, drying and disinfection for supplies such as bedding and clothing. So, a greenhouse 7A made of transparent materials, which built in an optimum location in residential area exposed directly under the sunlight, is regarded as a regular closed space. Proper amount of fans without motivity 7B are arranged on the top of the greenhouse 7A or at a clear place near the greenhouse 7A and connected to the greenhouse 7A through some connecting pipes provided with check valves 7E and valves 7D. The bottom of the greenhouse 7A is connected with a solar air heat collector 7C which has the same structure with the embodiment 1, detailed information please refer to the embodiment 1.

When the sunshine is sufficient, by employing present system, the greenhouse 7A not only can carry out ventilation, drying and disinfection to supplies such as bedding and clothing effectively, but also can be a place for resident leisure in cold season.

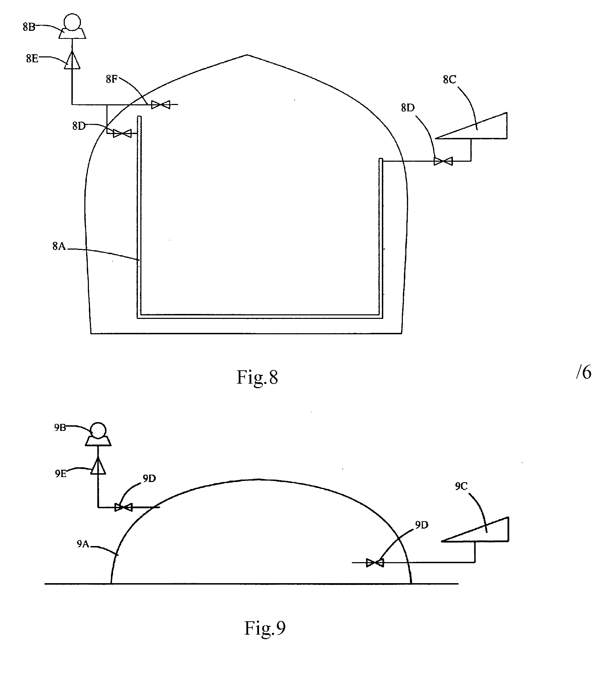

Figure 8 shows the eighth embodiment in accordance with the present invention. The applications in open buildings such as outdoor kiosk, newsstand and leisure pavilion in open air.

As the kiosk (such as the kiosk of Coca Cola or Pepsi Co. Ltd), newsstand and leisure pavilion in open air belong to open buildings, it has no economic feasibility for using the conventional energy resources to carry out the heat supply to their inside.

A solar air heat collector 8C and an exhaust device without motivity 8B can be arranged on the top of the kiosk or near the kiosk, and metal pipe 8A can be arranged at some proper places, such as buried in the wall, placed on the inner wall of the building 84 or on the ground, to form a "U" type structure. One end of the metal pipe 8A is connected with the exhaust device without motivity 8B through a connecting pipe provided with a check valve 8E and a valve 8D, and the other end is connected with a solar air heat collector 8C through a connecting pipe provided with a valve 8D.

In winter, a hot gas flow is generated inside the metal pipe 8A for instant heating and warming the inside of the building by using the exhaust device without motivity 8B and the solar air heat collector 8C. However, in summer, instant ventilation, moderate temperature reducing to the building 84 is carried out by only connecting the bypass channel 8F of the exhaust device without motivity 8B.

Figure 9 shows the ninth embodiment in accordance with the present invention. The active warming, drying, ventilation, and temperature reducing of the open-air tentage.

For example, in the field exercise, especially in scorching summer, soldier's clothes are almost wet every day. A tentage 9A is used as a regular closed space. When the tentage is set up, a solar air heat collector 9C is arranged nearby. Then PVC tube (provided with valve 9D) connecting to the solar air heat collector 9C is inserted into the bottom or the low portion of the tentage 9A. A turbo ventilator 9B is arranged at a high place. A PVC tube (provided with a check valve 9E and a valve 9D) connecting to the turbo ventilator 9B is inserted into the top or upper portion of the tentage 9A.

When there is sunshine, the preinstalled clothing drying facility in the open-air tentage can be used to dry soldiers' clothes. When there is no sunshine or at night, ventilation also can be employed to dry the soldiers' clothes. Meanwhile, when there is sunshine, the present method also can be used to hibernate in the fields. When temperature in the tentage 9A is higher, the connecting pipe at the side of the solar air heat collector 9C can be closed, and the wind in the open air or the hot air inside the tentage 9A can be used to drive the turbo ventilator 9B to rotate, so as to extract out the hot air inside the tentage 9A, and realize the requirement of instant ventilation and moderate temperature reducing.

Under proper conditions, the top of the tentage 9A can be made by transparent materials, in such a way, the heat supplying and drying effect will be better, and functions such as UV disinfection, greenhouse and so on can be provided also.

In additional, referring to the above embodiment, the present invention also can be applied to national defence, and applied to the processing of heating, ventilation temperature reducing and humidity eliminating and so on to the storeroom, barracks, and movable articles of national defence and military supplies (similar application embodiment: the American army connect the solar air heat collector with a blower system which comprises fans to increase the indoor temperature of the hangar), meanwhile, camouflage protection can be arranged on the top and the material of exhaust device without motivity also can be replaced by nonmetal material so as to improve the protection effect.

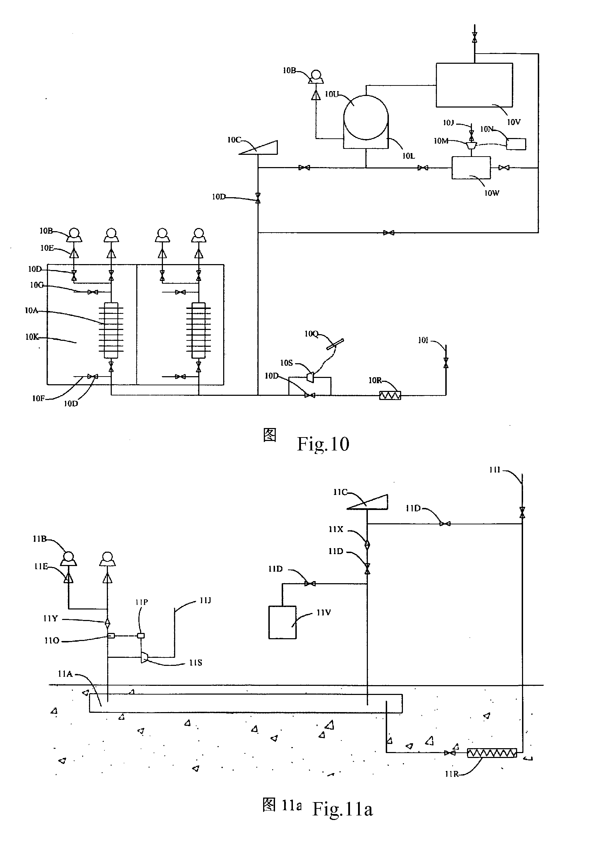

Figure 10 shows the tenth embodiment in accordance with the present invention. All-day, active heat supply and instant fresh hot air exchange are applied to the buildings (including temporary portable shelter and tentage etc.) in winter by the use of solar or marsh gas and temperature reducing can be applied by the use of underground cooler in summer.

Heat supply in winter, as shown in Fig. 10:

Each unit 10K of building (including fixed house, temporary portable shelter, tentage and so on) is provided with one or more radiators 10A, and energy storage material can be arranged inside or on the surface of each radiator 10A when necessary. A section of nozzle stub 10F provided with a valve 10D is side connected with the inlet tube of the radiator 10A, and a section of nozzle stub 10G provided with the valve 10D is side connected with the outlet of the radiator 10A, in such a way, when the solar hot gas flow is used to supply heat, the instant fresh hot air exchange inside the building unit 10K can be implemented. The outlet tube of each radiator 10A is connected with one or more exhaust devices without motivity 10B, herein, a check valve 10E and a valve 10D are provided on each connecting pipe, and the temperature inside the building unit 10K is regulated by opening or closing the valves 10D on the connecting pipes for changing the operation of the related exhaust devices without motivity 10B. A check valve 10E is provided at the suction opening of each exhaust device without motivity 10B for preventing the outside air backflow.

A solar air heat collector 10C is positioned at a best place to achieve sunshine and its hot air outlet is divided into two branches. The first branch is connected with the inlet tube of the radiator 10A in each building unit 10K through the valve 10D, and the second branch is connected with the inlet of a closed heating space 10L which located below a biomass pool 10U through another valve 10D, and the outlet of the closed heating space 10L is connected with the exhaust device without motivity 10B which located near the biomass pool 10U. In additional, energy storage material can be spread inside the closed heating space 10L in accordance with actual requirements. In this way, the solar air heat collector 10C can be used both on the heat supply to the building unit 10K and the heating of the biomass pool 10U.

The marsh gas produced by the biomass pool 10U is sent into a combustion train 10V for combustion. The first branch of the smoke which generated after combustion is discharged into atmosphere through the valve (when need no smoke for heat supply), the second branch is connected with the inlet tube of the radiator 10A in each building unit 10K through valve, and the third branch is connected with a gas-temperature regulating device 10W (energy storage material can be spread inside) which connected with the inlet of the closed heating space 10L of the biomass pool 10U through the valve. Moreover, a section of cold air blastpipe 10J which installed an air feeder 10M, a temperature controller 10N and a valve is arranged on the gas-temperature regulating device 10W. The temperature of the smoke in the gas-temperature regulating device 10W is regulated by guiding in cold air so as to prevent the temperature of the smoke which entered into the closed heating space 10L of the biomass pool 10U from going up too high and creating bad effect on the operation of the biomass pool 10U. Accordingly, in cold seasons, in order to guarantee sufficient marsh gas supply in all day long, it can select solar hot gas flow or smoke generated by the combustion train to heat the biomass poll 10U according to actual situation. For example, in cold daytime with sufficient sunshine, solar hot gas flow can be firstly used to heat the biomass pool 10U to increase the production of the marsh gas, and at night, the marsh gas is sent into the combustion train 10V for combustion. After the temperature of the generated smoke is regulated by the gas-temperature regulating device 10W, the smoke is used to heat the biomass pool 10U, so that the biomass pool 10U may supply sufficient marsh gas in all day long.

However, the combustion train may use the marsh gas produced by the biomass pool 10U and/or conventional fuel (such as coal, oil, biofuel etc.). So when the marsh gas production is insufficient because of cold and cloudy weather, smoke generated by the conventional fuel can be used to heat the biomass pool 10U firstly.

Dual efficiency of the combustion train is realized like this: the generated heat is used to serve industrial and agricultural production, and daily life (such as providing hot water); and the generated smoke is used to heat the biomass pool 10U, or serve industrial and agricultural production, and daily life either (such as using the methods of the second embodiment).

Thus it can be seen that in winter, the solar hot gas flow or smoke produced by the combustion train 10V can be used to heating and heat supply for each building unit 10K. For example, when the sunshine is sufficient in winter, each building unit 10K may use the solar hot gas flow to supply heat or implement instant fresh air exchange by flowing through the radiator 10A, and when the sunshine is insufficient or without any sunshine, heat supply may be carried out by smoke flowing through the radiator 10A. It should be noted that, at that time, the valves on the nozzle stub 10F which is side connected with the inlet tube of the radiator 10A and the nozzle stub 10G which is side connected with the outlet tube of the radiator 10A should be closed for preventing potential safety hazard and air pollution inside the building unit 10K.

Temperature reducing in summer, as shown in Fig.10:

A cooling exchanger 10R is buried underground near the building (better has a groundwater source). An suction inlet 10I of the inlet tube of the cooling exchanger 10R is positioned at a clear space on the ground, and the outlet tube of the cooling exchanger 10R is connected with the inlet tube of the radiator 10A of each building unit 10K in parallel through a valve 10D (which means connecting with the winter heat supply part in parallel). When the valve 10D is open, even in windless and hypaethral condition, as the inner air temperature of the radiator 10A of the building unit 10K is higher, it can drive the fan without motivity to rotate and form a negative press to extract cold air at the cooling exchanger 10R into the radiator 10A for reducing the indoor temperature. Of course, in order to guarantee the temperature reducing effect, an auxiliary blower 10S can be connected with the valve 10D in parallel (a solar photovoltaic generator 10Q or a wind power installation can be used for power supply).

When need to reduce the temperature, open the valve 10D located on the pipe of the cooling exchanger 10R and the indoor temperature can be reduced by using the radiator 10A inside the building unit 10K, or open the valve on the nozzle stub 10G side connected with the outlet tube of the radiator 10A and employ the cold auxiliary blower 10S to send cold wind into the room directly to reduce the indoor temperature.

In additional, when the indoor temperature isn't too high, only open the valve on the nozzle stub 10G side connected with the outlet tube of the radiator 10A, and employ the exhaust device without motivity 10B to do some treatments to the building unit 10K such as moderate temperature reducing, ventilation, humidity eliminating and so on.

It can be seen that, in summer, the exhaust device without motivity 10B or cold air generated by the cooling exchanger 10R which buried underground can be used to reduce the temperature in each building unit 10K, in such a way, a lot of refrigeration cost can be saved, and the object of saving energy can be obtained.

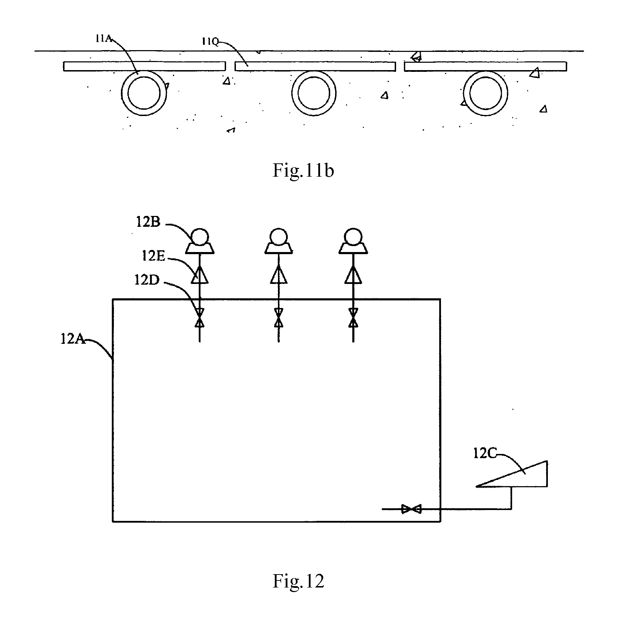

Figure 11a and 11b show the eleventh embodiment in accordance with the present invention. All-day and active heat supply is applied to prevent Icy pavement of airport, high way (roadway), bridge and so on by using solar energy, subterranean heat and smoke in winter, and reduce pavement temperature in summer.

As shown in Fig 11a and 11b, a metal pipe 11A which shallowly buried underground is regarded as a regularly closed space, and every metal pipe 11A is connected (as welded) with a metal plate 11Q for heat exchange, the metal plate 11Q parallels with the pavement. The inlet of the metal pipe 11A has two branches, one branch is connected with the outlet of a heat exchanger 11R (below the frozen soil layer, a place with low temperature geothermal is preferred, such as 10-25°C geothermy, and energy storage material can be spread inside) which is deeply buried underground, and the other branch is connected with a solar air heat collector 11C.

The connecting pipe between the inlet of the metal pipe 11A and the outlet of the heat exchanger 11R which deeply buried underground is provided with valves. The connecting pipe between the inlet of the metal pipe 11A and the solar air heat collector 11C is provided with a self-acting temperature control valve 11X and a valve 11D. The temperature control point of the self-acting temperature control valve 11X is set to a value higher than 0°C (such as 6°C). When inlet temperature of the self-acting temperature control valve 11X is higher than the setting temperature, the self-acting temperature control valve 11X will be opened, otherwise closed.

Meanwhile, a pipe provided with a valve and connected with smoke vent of a standby combustion train 11V is side connected with the connecting pipe between the metal pipe 11A and the valve 11D which connected with the self-acting temperature control valve 11X. In additional, a pipe provided with a valve and connected with the inlet of the heat exchanger 11R which deeply buried underground is side connected with the connecting pipe between the self-acting temperature control valve 11X and the solar air heat collector 11C, and a nozzle stub 11I provided with a valve and connected with the atmosphere is side connected with the pipe connected with the inlet of the heat exchanger 11R which deeply buried underground.

It can be seen that, in winter, the hot gas flow entered into the metal pipe 11A can arrive at the metal pipe 11A through the self-acting temperature control valve 11X and the valve 11D from the solar air heat collector 11C, or arrive at the metal pipe 11A through the heat exchanger 11R which deeply buried underground from the solar air heat collector 11C, or arrive at the metal pipe 11A from the standby combustion train 11V In summer, the cooling gas flow entered into the metal pipe 11A can arrive at the metal pipe 11A through the heat exchanger 11R which deeply buried underground from the nozzle stub 11I which communicated with the atmosphere.

Thus, in ordinary condition in winter, open the valve 11D on the connecting pipe between the self-acting temperature control valve 11X and the metal pipe 11A, and the valve 11D on the connecting pipe between the solar air heat collector 11C and the heat exchanger 11R which deeply buried underground at the same time. When the temperature of the hot gas flow generated by the solar air heat collector 11C is higher than the setting temperature of the self-acting temperature control valve 11X, most of the hot gas flow generated by solar energy enters into the metal pipe 11A through the connecting pipe provides with the self-acting temperature control valve 11X and heats the metal pipe 11A by using solar energy. When temperature of the hot gas flow generated by the solar air heat collector 11C is lower than the setting temperature of the self-acting temperature control valve 11X, the outside air enters into the metal pipe 11A through the solar air heat collector 11C and the heat exchanger 11R which deeply buried underground and heats the metal pipe 11A by using the heat of the solar air heat collector 11C and the heat exchanger 11R which deeply buried underground.

In freezing season, only have to open the valve 11D on the connecting pipe between the standby combustion train 11V and the metal pipe 11A and use the smoke to heat the metal pipe 11A directly.

When wind enters in summer, only have to open the valve on the connecting pipe between the nozzle stub 11I which connected with the atmosphere and the heat exchanger 11R which deeply buried underground, the outside air enters into the metal pipe 11A after cooling by the heat exchanger 11R which deeply buried underground.

The outlet of the metal pipe 11A which shallowly buried underground is connected with proper amount of exhaust devices without motivity 11B which arranged at a clear place nearby through a section of pipe provided with a flow probe 110, a self-acting temperature control valve 11Y and a check valve 11E. The temperature control point of the self-acting temperature control valve 11Y is set to a value higher than 0°C (such as 3°C). When inlet temperature of the self-acting temperature control valve 11 Y is higher that the setting temperature, the self-acting temperature control valve 11Y will be opened, otherwise closed.

A bypass pipe 11J is arranged on the connecting pipe between the metal pipe 11A and the flow probe 110, the exhaust outlet of the bypass pipe 11J is connected with the atmosphere, an auxiliary exhaust blower 11S is arranged on the bypass pipe 11J. Signals sampled by the flow probe 11O are sent to a control device 11P of the auxiliary exhaust blower 11S. An outlet temperature probe and a time delay controller of the auxiliary exhaust blower 11S are set inside the control device 11P. When the flow signal sampled by the flow probe 11O is closed to zero which means the exhaust device without motivity 11B doesn't work, the auxiliary exhaust blower 11S will be turned on at this time. If the exhausting temperature of the auxiliary exhaust blower 11S still can not reach the set temperature value (such as 3°C) after a certain time delay (such as 3min), the auxiliary exhaust blower 11S will be turned off and such situation will be sent to the watching platform on the pavement so as to notify the staff in time.

In winter, when the temperature of the discharging gas flow of the metal pipe 11A reaches the set temperature (such as 3°C) of the self-acting temperature control valve 11Y, it means the temperature of the metal pipe 11A which shallowly buried underground should be above 0°C, this can prevent the pavement from freezing. At this time, the discharging gas flow of the metal pipe 11A is extracted by the exhaust device without motivity 11B or the auxiliary exhaust blower 11S. When the temperature of the discharging gas flow of the metal pipe 11A keeps lower than the set temperature (such as 3°C)of the self-acting temperature control valve 11Y all the while, both the exhaust device without motivity 11B and the auxiliary exhaust blower 11S won't work. At this time, the staff receiving such information should start the standby combustion train 11V peremptorily and use smoke to heat the metal pipe 11A which shallowly buried underground to prevent the pavement from freezing. In summer, as the temperature of the discharging gas flow of the metal pipe 11A is high, even in windless and hypaethral condition, the exhaust device without motivity 11B is driven to extract gas, the air outside is extracted through the nozzle stub 11I which connected with the atmosphere, the heat exchanger 11R which deeply buried underground and the metal pipe 11A, in such a way the metal pipe 11A is cooled instantly. In additional, the power supply of the auxiliary exhaust blower 11S should be cut off at this time.

Thus, in frozen seasons, in daytime with sufficient sunshine, the solar hot air flow enters into the metal pipe 11A which shallowly buried underground and heats the pavement instantly to prevent Icy pavement. When there is no sunshine or at night, as the air temperature inside the heat exchanger 11R which deeply buried underground is always higher than the ambient temperature and above 0°C ,and the solar air heat collector 11C will generate low temperature hot air higher than the ambient temperature either, so by using the exhaust device without motivity 11B or the auxiliary exhaust blower 11S, the low temperature hot air produced by the solar air heat collector 11C and the heat exchanger 11R which deeply buried underground is extracted into the metal pipe 11A, so instant heating is carried out on the pavement to prevent Icy pavement. In seriously frozen time, the standby combustion train 11V can be used to generate high temperature smoke and use the smoke to heat the pavement instantly to prevent Icy pavement.

In midsummer, only open the valve on the connecting pipe between the nozzle stub 11I which connected with the atmosphere and the heat exchanger 11R which deeply buried underground, at that time, the temperature of the pavement is high, and this will result in that the air temperature inside the metal pipe 11A which shallowly buried ground is higher than the ambient temperature, so even in windless and hypaethral condition, the exhaust device without motivity 11B will be driven to extract air outside continually entering into the heat exchanger 11R which deeply buried underground for cooling(at this time, the inside temperature of the heat exchanger 11R which deeply buried underground is lower than the ambient temperature), after that the air enters the metal pipe 11A which shallowly buried underground to reduce the pavement temperature instantly.

It can be seen that, by employing present scheme, in freezing season, all-day, active and without motivity heat supply can be achieved by alternate using solar energy, subterranean heat and smoke to solve the problem of Icy pavement and avoided surrounding environmental pollution caused by salting on the pavement, and it can also overcome the limitation of single heat supply mode. In midsummer, all-day, active and without motivity instant temperature reduce can be achieved by using the characteristic that the inside temperature of the heat exchanger 11R which deeply buried underground is lower than the ambient temperature to avoide the problem of tire burst due to the too high temperature of the pavement and reduce traffic accidents.

Compare with British under-road radiator pilot system, in the aspect of preventing Icy pavement in winter, the present technique has following advantages:
(A). It can heat the pavement instantly without heat accumulation system.
(B). The cost is comparatively cheaper and it is easier to implement and use widely.

It is worthy to be mentioned that, the present scheme also can be applied to the outer surface of the buildings. It can reduce the temperature difference and thermal conductivity gradient and help realize building green energy-saving.

In additional, when the schemes of the tenth and eleventh embodiment are applied to the building simultaneously, it will be very helpful to realize the building green energy-saving.

Figure 12 shows the twelfth embodiment in accordance with the present invention. Applying the present invention to the buildings such as house, school, hospital, office commercial building etc. to regulate indoor temperature, improve indoor air quality and realize green energy-saving.

At present, in order to satisfy requirements of heat preservation and noise isolation, the airtight performance of a building 12A is generally improved. In winter, the building 12A generally can't carry out instant fresh hot gas exchange and this will results in the decline of indoor air quality. However, if open windows to ventilate, thermal in the building 131 will lose.

A solar air heat collector 12C and proper amount of exhaust devices without motivity 12B are arranged separately on the roof, or at a proper place on the outer wall or at a clear place. The suction opening of every exhaust device without motivity 12B is connected with an outlet which located at the higher place on the inner wall of the room through a section of pipe provided with a check valve 12E. A valve 12D is provided at the outlet. The outlet of the solar air heat collector 12C is connected with an inlet which located at the lower place on the inner wall of the room through a pipe, wherein, a valve 12D is provided at the inlet.

In cold season, when the sunshine is sufficient and the indoor temperature is too low or the room need fresh hot air exchange, open the valves 12D at the inlet and outlet which located on the inner wall to increase the indoor temperature by the use of solar hot gas flow and achieve instant fresh hot air exchange. In additional, for energy saving, solar heat supply may be used firstly, and on the basis of this, conventional heat supply device can be used to guarantee the heating requirement of the building 13A. At night, or in a cloudy day, or no need to heat, close the valves at the inlet and the outlet.

When temperature is comfortable, open the valves 12D at the inlet and outlet which located on the inner wall. At this time, ventilation and air exchange are both achieved and the noise isolation is guaranteed too. And meanwhile, it can prevent outdoor dust entering and keep indoor cleaning.

When the indoor temperature is too high, or the humidity is too big, or the room needs ventilation, open the window and the valves 12D on the pipe of the exhaust device without motivity 12B, the heat or the humid air will be discharged and fresh air will be indrafted by the use of the exhaust device without motivity.

Multi-functions of the present embodiment are realized in this way. Compare with the Enertia building system which was one of the best inventions of TIME in 2007, the present invention has following advantages:
(A). Heat supply and moderate temperature reducing can be achieved to the building 131 in an active mode.
(B).The present invention can be applied to any existed or new-built building 131.
(C). The cost is comparatively cheaper and it is easier to implement and use widely.

In the preceding detailed description, some preferred embodiments in representative fields were listed out, in which the present invention maybe practiced. It is to be understood that, the preceding detailed description is not intended to be limited to the specific forms set forth herein, other suitable embodiments may be utilized and that detailed changes may be made by those skill in the art is intended to be reasonably included within the spirit and scope of the present invention, such as set a plurality of exhaust devices without motivity, a plurality of solar air heat collectors or heat exchangers and so on.

## Claims

1. An active thermoregulation system without motivity, wherein, including a gas source, a regular closed space, an exhaust device without motivity, a first connecting device and a second connecting device;
The gas source includes a gas flow outlet;
The regular closed space is separated from the external environment while using, and includes an inlet and an outlet set up separately;
The exhaust device without motivity includes a blade and suction opening corresponding to the blade;
One end of the first connecting device is connected with the gas flow outlet of the gas source, and the other end is connected with the inlet of the regular closed space to join the gas source to the regular closed space;
One end of the second connecting device is connected with the suction opening, and the other end is connected with the outlet of the regular closed space to join the exhaust device without motivity to the regular closed space;
During working process, by utilizing the natural wind of the external environment and/or the temperature difference between the inside and outside of the regular closed space, the blade of the exhaust device without motivity is driven to rotate, then a low pressure is formed at the suction opening, the gas at the suction opening is extracted and this makes the gas flow around the gas source continuously extracted through the regular closed space, and a heat exchanging gas flow is formed in the regular closed space.

2. The system according to claim 1, wherein, materials needed to be processed by heat exchanging is positioned inside the regular closed space or, one or more surfaces of the regular closed space is made of heat conductive materials, and supplies need to be heat exchange processed is positioned on or around such surfaces.

3. The system according to claim 2, wherein, the gas source at least comprises any one of a hot gas source or a cold gas source, the temperature of the hot gas flow from the hot source is higher than the temperature of the materials needed to be processed by heat exchanging, the gas flow of the hot gas source comes from a heat collector, and/or a heat exchanger, and/or hot gas; the heat collector comprises high, middle and low temperature solar air heat collector; the hot gas comprises smoke and/or discharged hot flue gas;
The temperature of the cold gas flow from the cold source is lower than the temperature of the materials needed to be processed by heat exchanging, the gas flow of the cold gas source comes from air with temperature lower than the materials needed to be processed by heat exchanging, and/or cooling device, or cold gas;
Or, the gas source may comprise more than two gas sources; when the hot gas source and the cold gas source are connected in parallel, a selection device for selecting at least one of the hot gas source and the cold gas source to work is provided.

4. The system according to claim 3, wherein, when the gas source is the hot gas source, the inlet is set at the under layer or the bottom of the regular closed space, and the outlet is set at the upper layer or on the top of the regular closed space; when the gas source is the cold gas source, the inlet is set at the upper layer and on the top of the regular closed space, and the outlet is set at the under layer or the bottom of the regular closed space.

5. The system according to claim 2, wherein, when the materials needed to be processed by heat exchanging are positioned inside the regular closed space, an energy storage material is positioned inside the regular closed space; or when one or more surfaces of the regular closed space are made of heat conductive material and the materials needed to be processed by heat exchanging are positioned on or around such surfaces, the energy storage material is positioned inside the regular closed space, and/or on the surfaces, and/or around the surfaces.

6. The system according to claim 1, wherein, the first connecting device is a first connecting pipe provided with a valve and a control device;
The second connecting device is a second connecting pipe provided with a valve and a control device; and a check valve is installed on the second connecting pipe.

7. An active thermoregulation method without motivity, wherein, comprise following steps:
S1: setup a gas source and provide gas flow through a gas flow outlet;
S2: connect a regular closed space separated from the external environment with the gas source, and the gas flow enters into the regular closed space through an inlet;
S3: setup an exhaust device without motivity and connect the exhaust device without motivity with the outlet of the regular closed space, the gas flow of the gas source is extracted through the outlet by the exhaust device without motivity, and a heat exchanging gas flow is formed through the regular closed space.

8. The method according to claim 7, wherein, the method further comprises a detection and control step S4, setup a detection device and a control device to detect and accurately control the parameters of the temperature, humidity, throughput, heat exchange amount and processing time of the gas flow; setup an auxiliary fan and start the auxiliary fan when the throughput is insufficient.

9. The method according to claim 7, wherein, the materials needed to be processed by heat exchanging are positioned inside the regular closed space, an energy storage material is positioned inside the regular closed space; or when one or more surfaces of the regular closed space are made of heat conductive materials and the materials needed to be processed by heat exchanging are positioned on or around such surfaces, the energy storage material is positioned inside the regular closed space, and/or on the surfaces, and/or around the surfaces.

10. The method according to claim 7, wherein, the gas source comprises a hot gas source and/or a cold gas source;
When the materials needed to be processed by heat exchanging need to be heated, the hot gas source is connected to provide hot gas flow with temperature higher than the temperature of the materials needed to be processed by heat exchanging;
When the materials needed to be processed by heat exchanging need to be cooled, the cold gas source is connected to provide cold gas flow with temperature lower than the temperature of the materials needed to be processed by heat exchanging;
Or, when the hot gas source and the cold gas source are connected in parallel, one of the hot gas source and the cold gas source is selected to connect with the regular closed space by a selection device; when the materials needed to be processed by heat exchanging need to be heated, the hot gas source is connected, and when the materials needed to be processed by heat exchanging need to be cooled, the cold gas source is connected.
